# EUROPEAN PATENT APPLICATION

(11) **EP 1 462 212 A1**
(43) Date of publication of application: **29.09.2004**
(21) Application number: 04090082.1
(22) Date of filing: 03.03.2004
(51) Int. Cl.: B23Q 7/14, B23Q 16/00

(54) **A pallet conveyor with lifterless pallet-locating apparatus**

(30) Priority: 28.03.2003 US 402467
(71) Applicant: Progressive Tool & Industries, Co., Southfield, MI 48034 (US)
(72) Inventor: Kilibarda, Velibor, Birmingham Michigan 48009 (US)
(74) Representative: Pfenning, Meinig & Partner GbR

(57) **Abstract**

A locating workstation according to the present invention is provided on a conveyor for transporting a workpiece The locating workstation includes at least one support or rail defining a fixed path of travel along an X-axis with respect to the workstation and having a vertically extending Z-axis, and a Y-axis extending normal to the X-axis and the Z-axis A movable geometry fixture pallet is supported on the at least one support rail for movement along the fixed path. Positioning devices are provided for locating the pallet in a repeatable precise X-Y-Z position with respect to the workstation. The positioning device includes at least one locating roller and corresponding locating cam surface combination operable between the pallet and the workstation for positioning the pallet in at least one of the Y-axis and Z-axis, and at least one pivotable locating roller and corresponding locating cam surface combination operable between the pallet and the workstation for positioning the pallet along the X-axis, such that when the pivotable locating roller and corresponding locating cam surface combination is in a first angular position, the pallet can move relative to the workstation along the support, and when the pivotable locating roller and corresponding locating cam surface combination is in a second angular position, the pallet is accurately positioned with respect to the X-axis, Y-axis, and Z-axis of the workstation in response to operable engagement of the positioning devices in response to rotational engagement of the pivotable locating roller and corresponding locating cam surface combination.

## Description

### FIELD OF THE INVENTION

The present invention relates to a pallet locating system for repeatedly precisely locating one of a plurality of pallets being transported along a conveyor to a workstation in three dimensions corresponding to an X-axis, a Y-axis, a Z-axis extending perpendicular to one another, and more particularly to an apparatus and method for locating any one of a plurality of pallets being transported along a conveyor to a workstation without requiring a lift mechanism and the cycle time associated with changes in elevation typically required in existing locating devices.

### BACKGROUND OF THE INVENTION

In existing locating devices, the pallet requires total cycle time of approximately ten (10) seconds (excluding work or process cycle time while precisely located at the workstation). The total cycle time (excluding work or process cycle time) to deliver a pallet to a workstation, precisely locate the pallet, and position the pallet for removal from the workstation includes transport time of approximately six (6) to eight (8) seconds, lowering time of approximately one-and-one-half (1.5) seconds, and lifting time of approximately on-and-one-half (1.5) seconds. The total cycle time is generally the same for devices that lift the pallet to precisely locate, when compared with devices that lower the pallet to precisely locate. Therefore, vertical direction or sequential order of the operations (i. e. lift-then-lower versus lower-then-lift) is unimportant to the total cycle time of known devices. With increased production capacities of new production lines and other time saving techniques currently being practiced by the major automotive manufacturing companies, it would be desirable to reduce the total cycle time (excluding work or process cycle time), since any savings in cycle time would either directly increase maximum production capability of the assembly line through the corresponding workstation, or would increase the work or process cycle time available in order to perform more work at the same workstation.

### SUMMARY OF THE INVENTION

The present invention relates to a lifterless pallet power roll conveyor where the pallet can be precisely located using an X-axis locating device, Y-axis cam surface and roller locators, and Z-axis cam surface and roller locators. Known pallet power roll conveyor systems typically require between six to eight seconds to travel 22 feet during transfer to a known pallet locating workstations. An additional 1.5 seconds is required to lower or raise the pallet in order to locate the pallet in the X-axis, Y-axis and Z-axis, and an additional 1.5 seconds to raise or lower the pallet after the work cycle has been completed. The total cycle time, excluding the work time, is approximately 10 seconds for transferring, lowering, and raising the pallet from the geometry locating position.

The present invention reduces the cycle time (excluding work time) by eliminating the 1.5 seconds to lower and the additional 1.5 seconds to raise the pallet as required in known systems. This reduces the total cycle time to be equal to just the transfer time which can be reduced to less than or equal to 7 seconds, and preferably less than or equal to 6 seconds. The present invention uses cam rollers to precisely locate the pallet on the power roller system as the pallet is transferred to the locating workstation. The Y-axis cam surfaces and cam rollers used for locating the pallet according to the present invention are positioned with one portion of the complementary roller and cam surface connected to the pallet and the other portion connected to the workstation or power roller conveyor. It should be noted that Y-axis cam surfaces can be staggered or offset from one another so that leading and trailing Y-axis cam surfaces operably engages the corresponding Y-axis rollers only when approaching the precisely located position at the workstation.

The pallet can include downwardly facing cam surfaces engagable with Z-axis cam rollers as the pallet is located at the locating workstation. The Z-axis cam surfaces and rollers according to the present invention are positioned with one portion of the complementary roller and cam surface connected to the pallet and the other portion connected to the workstation or power roller conveyor. It should be noted that three Z-axis cam surfaces can be staggered or offset from one another so that each Z-axis cam surface operably engages the corresponding Z-axis roller only when approaching the precisely located position at the workstation. According to the present invention, the final X-axis locating device includes an actuator for rotating a shaft about a vertically extending axis. The shaft is rotatable through approximately 90° between a locating position and a released position. When in the locating position, complementary roller and cam surfaces formed on locating blocks operably engage to locate the pallet precisely with respect to the workstation.

In the preferred configuration, the locating blocks can be attached to the underside of the pallet and are staggered in the X-axis direction with respect to one another. As the diametrically opposite locating crank arms of the locating device rotate in response to rotation of the shaft, the opposite rollers connected adjacent the outer ends come into contact with the corresponding locating blocks and the actuator drives the pallet into a known centered location with respect to the vertically extending axis of the shaft; simultaneously, the pallet is moved onto the Z-axis cam rollers and is positioned by the Y-axis cam rollers causing the pallet to be precisely located at the locating station. After the work cycle is completed, the diametrically opposed locating arms are rotated by rotation of the shaft through the actuator in the opposite direction to release the pallet from the locating workstation. The pallet can also include a physical characteristic, such as a slot, capable of being used in combination with a sensor for determining when the pallet has reached the ready-to-locate position or stop position. When in the ready-to-locate or stop position, the actuator can be triggered for rotating the locating arms to move the pallet to the precisely located position at the workstation. The initial ready-to-locate position requires much less accuracy than previously required for known lift locating devices, since the pallet can reach a relatively large "ready-to-locate" position of within plus or minus 8 millimeters prior to actuating the actuator to rotate the shaft and diametrically opposed locating crank arms into engagement with the locating blocks associated with the pallet.

Other applications of the present invention will become apparent to those skilled in the art when the following description of the best mode contemplated for practicing the invention is read in conjunction with the accompanying drawings.

### BRIEF DESCRIPTION OF THE DRAWINGS

The description herein makes reference to the accompanying drawings wherein like reference numerals refer to like parts throughout the several views, and wherein:

Figure 1 is a simplified schematic illustration of a locating workstation and a lifterless geometry fixture pallet for a high speed power roll conveyor according to the present invention;

Figure 2 is a simplified schematic diagram of the locating workstation and the pallet illustrating at least one complementary Y-axis roller and cam surface locating device according to the present invention;

Figure 3 is an end elevational view of the locating workstation and the pallet illustrating leading and trailing complementary Y-axis roller and cam surface locators as illustrated in Figure 2 and staggered in the Z-axis direction with respect to one another;

Figure 4 is a simplified side elevational view of the locating workstation and the high speed geometry fixture pallet illustrating at least one complementary Z-axis roller and cam surface locating device according to the present invention;

Figure 5 is an end elevational view of the locating workstation and the pallet illustrating leading, central, and trailing complementary Z-axis roller and cam surface locators as illustrated in Figure 4 and staggered in the Y-axis direction with respect to one another on each side of the pallet according to the present invention;

Figure 6 is a detailed side elevational view of one of the Z-axis roller and cam surface locators according to the present invention;

Figure 7 is a detailed plan view of the locating workstation and the high speed geometry fixture pallet illustrating at least one X-axis locating device rotatable between a released position shown in solid line and a locating position shown in phantom line according to the present invention;

Figure 8 is a detailed view of a signaling device for use in combination with a conventional sensor for determining when a pallet according to the present invention is in a ready-to-locate position;

Figure 9 is a graph illustrating velocity versus time for movement of a pallet from a prior position to a located position with respect to a workstation according to the present invention; and

Figure 10 is a simplified perspective view of a conventional geometry fixture pallet lift and locator workstation.

### DESCRIPTION OF THE PREFERRED EMBODIMENT

Referring to Figure 10, a known high speed geometry fixture pallet system is illustrated in exploded perspective view. In the known configuration, a standard base fixture 100 is provided at the workstation and supports a vertically movable portion 102 of a power roll conveyor system. A pallet (not shown) is delivered to the vertically movable portion 102 to be precisely located at the workstation prior to work being performed. The vertically movable portion 102 is lowered by lift 104 to bring the pallet into operable engagement with a four way pallet locator pin 106, Z-axis pallet locators 108, and Y-axis two way pallet locator 110. Precisely locating the pallet with the known locating system typically requires a total cycle time of approximately 10 seconds (excluding work or process cycle time). The total cycle time (excluding work or process cycle time) to deliver the pallet to the workstation, precisely locate the pallet, and position the pallet for removal from the workstation includes a transport time portion of approximately 6 to 8 seconds, a lowering time portion of approximately 1 ½ seconds, and a lifting time portion of approximately 1 ½ seconds.

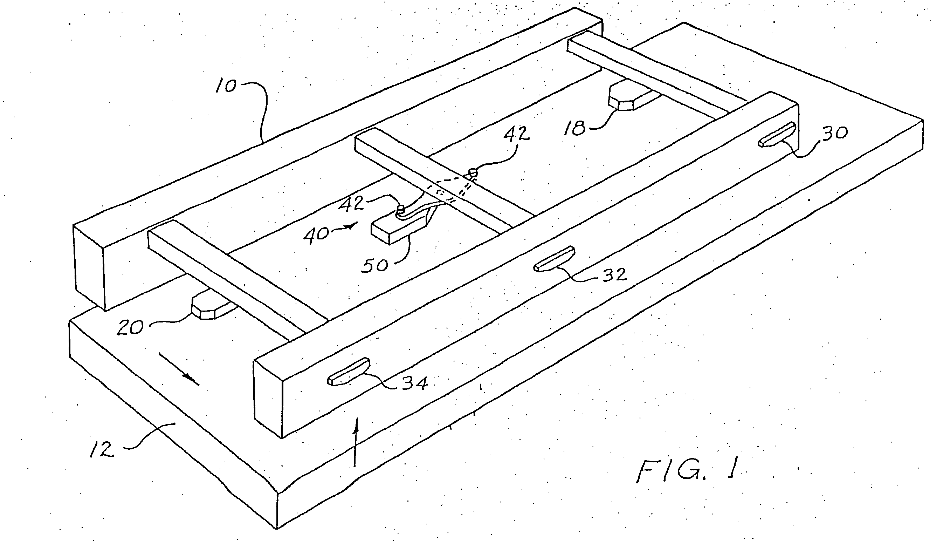

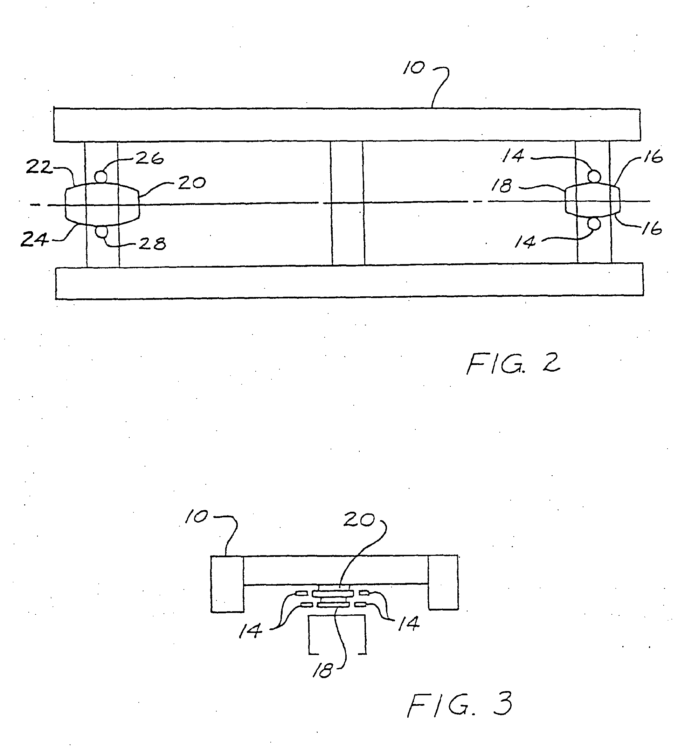

Referring now to Figures 1-9, the present invention relates to a lifterless high speed geometry fixture pallet power roll conveyor, where the pallet can be precisely located without requiring a lift mechanism for moving the pallet with respect to the locating rollers and pins as used in the previously known locating systems. According to the present invention, a geometry fixture pallet 10 is provided for movement along a conventional high speed power roll conveyor system shown schematically as numeral 12. Pallet 10 is provided with complementary Y-axis roller and cam surfaces 14, 16 respectively, as best seen in Figures 1-3. A Y-axis locating device can include a complementary Y-axis locating roller 14 and Y-axis locating cam surfaces 16. Leading and trailing Y-axis locating assemblies can be provided spaced along the X-axis from one another to provide at least one Y-axis locating roller and complementary Y-axis locating cam surface assembly adjacent a leading edge of the pallet and at least one Y-axis locating roller and complementary Y-axis locating cam surface assembly adjacent the trailing edge of the pallet. As best seen in Figure 3, the leading Y-axis locating assembly 18 can be spaced vertically along the Z-axis with respect to the trailing Y-axis locating assembly 20. In this manner, the leading Y-axis locating assembly does not engage with the corresponding locating portion of the trailing Y-axis locating assembly 20 as the pallet is being delivered to the workstation. The complementary rollers and cam surfaces 14, 16 only engage when the pallet is being moved from the ready-to-locate position to the precisely located position by the X-axis locating device to be described in greater detail below. This reduces unnecessary wear on the precise locating roller and cam surface of the locating devices. In the illustrated embodiment, the Y-axis locating assemblies 18, 20 include Y-axis locating cam surfaces 22, 24 extending along opposite longitudinally extending sides operably engagable with opposing Y-axis locating rollers 26, 28. In the illustrated embodiment, the cam surfaces are connected to the pallet, while the rollers are located at the workstation. However, it should be recognized that the Y-axis locating rollers could be connected to the pallet while the Y-axis locating cam surfaces are located at the workstation without departing from the present invention. It should also be recognized that some Y-axis locating cam surfaces could be connected to the pallet and some Y-axis locating rollers could be connected to the pallet, while complementary Y-axis locating rollers and Y-axis locating cam surfaces are connected to the workstation without departing from the present invention.

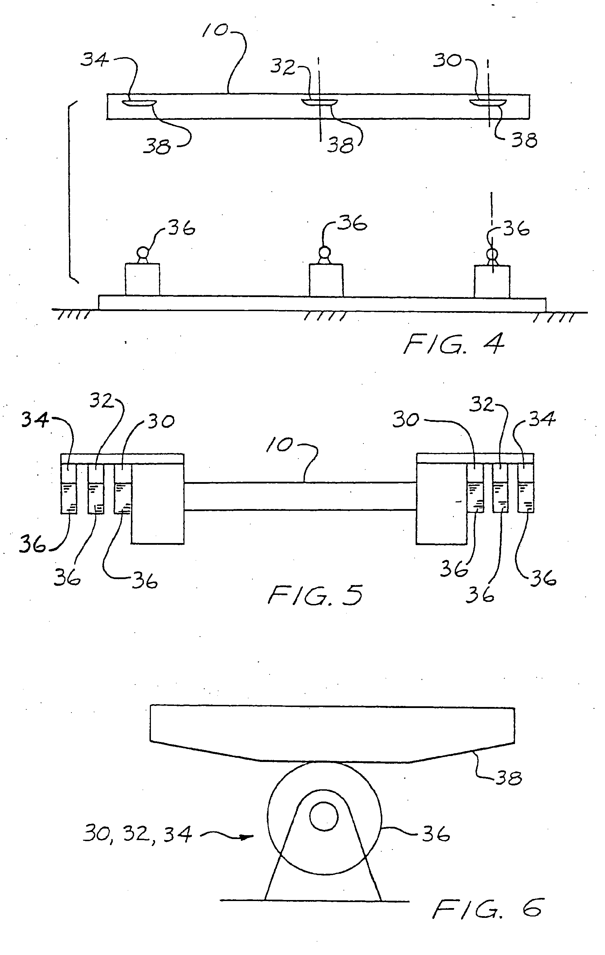

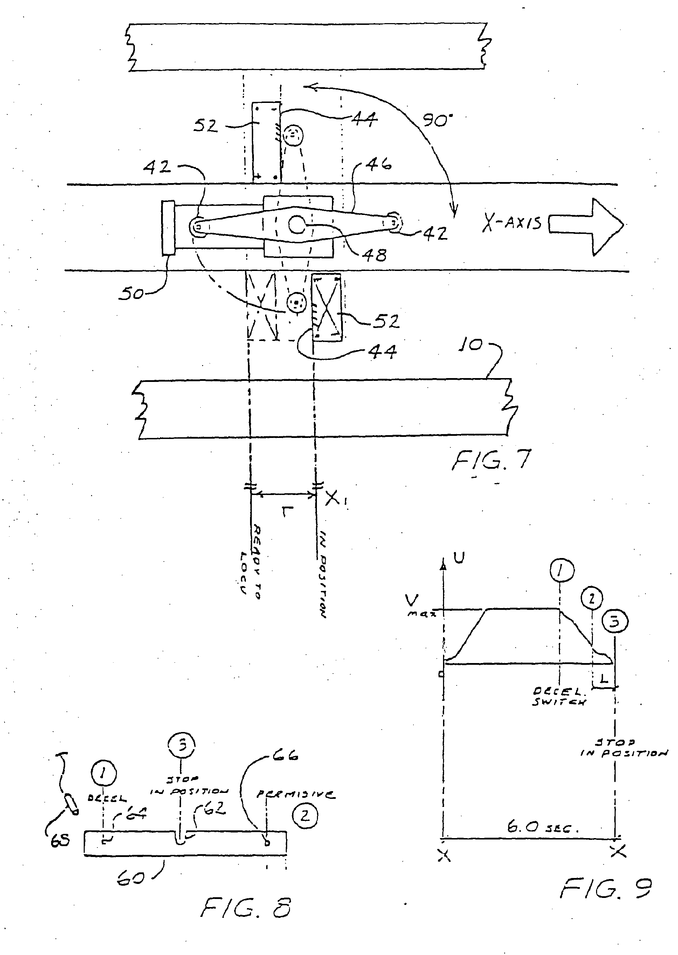

Referring now to Figures 1, 4 and 5, the Z-axis locating devices 30, 32, 34 are illustrated in greater detail along the longitudinal edges of the pallet 10. The Z-axis locating devices 30, 32, 34, each include complementary Z-axis locating roller 36 and Z-axis locating cam surfaces 38. As best seen in Figure 5, the Z-axis locating devices 30, 32, 34 are spaced along the Y-axis with respect to one another, so that each Z-axis locating device 30, 32, 34 only engages the corresponding complementary Z-axis locating roller 36 and Z-axis locating cam surfaces 38 when the pallet is moving from the ready-to-locate position to the precisely located position. This configuration allows the leading Z-axis locating assembly 30 to pass by the central Z-axis locating device 32, and trailing Z-axis locating device 34, as the pallet is being delivered to the workstation. Furthermore, this configuration allows the central Z-axis locating device 32 to pass the trailing Z-axis locating portion without engagement as the pallet 10 is delivered to the workstation. This reduces unnecessary wear on the precise locating roller and cam surface of the locating devices. In the illustrated embodiment, the Z-axis locating cam surfaces 38 are illustrated connected to the pallet 10 while the Z-axis locating rollers are connected to the workstation. However, it should be recognized that the Z-axis locating roller 36 could be connected to the pallet 10 while the complementary Z-axis locating cam surfaces 38 are connected to the workstation without departing from the present invention. Furthermore, it should be recognized that some Z-axis locating cam surfaces 38 could be connected to the pallet, while other Z-axis locating rollers 36 are connected to the pallet for engagement with the corresponding Z-axis locating rollers and Z-axis locating cam surfaces are connected at the workstation without departing from the present invention. A detailed illustration of one of the complementary Z-axis locating roller 36 and Z-axis locating cam surface 38 of the locating devices 30, 32, 34 is illustrated in Figure 6.

Referring now to Figures 1 and 7, the X-axis locating device 40 is illustrated in detail. The X-axis locating assembly 40 includes complementary X-axis locating roller and X-axis locating cam surfaces 42, 44 respectively for moving the pallet 10 from the ready-to-locate position to the precisely located position. In the illustrated embodiment, the X-axis locating rollers 42 are connected adjacent to diametrically opposite outer ends of a diametrically extending crank arm 46 connected to a centrally located rotatable shaft 48. The shaft 48 is rotatable by an actuator 50 through approximately 90° of rotation between a released position shown in solid line, and a locating position shown in dashed line. In the illustrated configuration, X-axis locating cam surfaces 44 are formed on locating blocks 52 connected to the pallet 10. The locating blocks 52 are spaced longitudinally from one another along the X-axis and along the Y-axis. When in the released position, the crank arm and attached rollers pass between the two longitudinally Y-axis spaced locating blocks 52. When in the ready-to-locate position, the actuator 50 is operated to rotate the shaft 48 and attached crank arm 46 to move the rollers 42 from the released position to the locating position. When in the locating position as shown in dash line, the rollers 42 engage with the cam surfaces 44 of the locating blocks 52 in order to position the shaft centrally between the locating blocks along the longitudinal X-axis. As the pallet 10 moves from the ready-to-locate position to the precisely located position, the pallet is precisely located in three longitudinal axes, i.e. X-axis, Y-axis, and Z-axis, to precisely locate the pallet with respect to the workstation in response to actuation of the actuator 50. After work has been completed at the workstation, the pallet is released by actuating the actuator 50 to reverse rotation of the shaft 48 and connected crank arm 46 to move the rollers 42 to the released position. The pallet 10 can then be removed from the workstation. It should be recognized that the illustrated embodiment can be modified by reversing the position of the X-axis cam surfaces and X-axis rollers, so that the X-axis roller is connected to the pallet, while the X-axis locating cam surface is connected to the crank arm without departing from the present invention. Further, it should be recognized that one of the X-axis locating rollers could be connected to the pallet, and one of the X-axis locating cam surfaces is connected to the pallet, while complementary X-axis locating cam surfaces and X-axis locating rollers are formed on the crank arm without departing from the present invention.

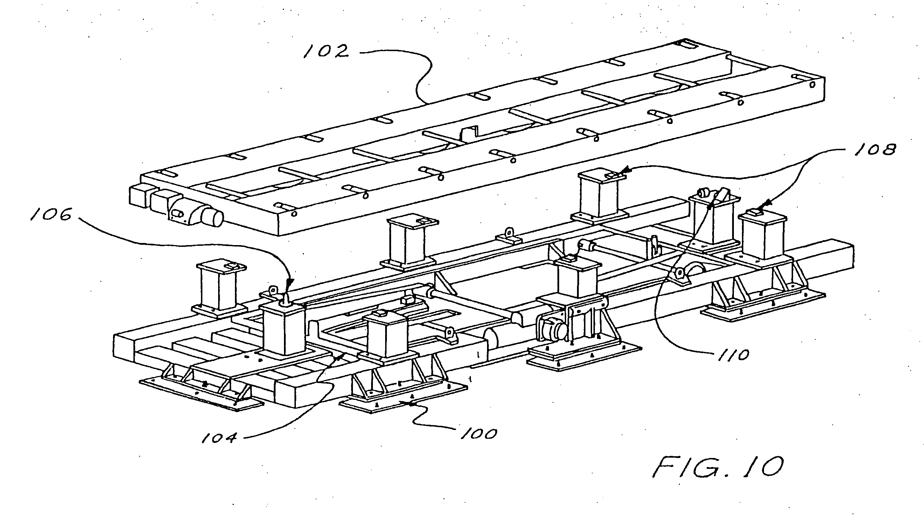

Referring now to Figure 8, a simplified detail of a location signaling device 60 is illustrated. The location signaling device can include a vertically extending aperture or slot 62 having a diameter or width along the X-axis of approximately 8 millimeters. A conventional sensor, either contact or non-contact, can be associated with the location signaling device in order to generate a signal when the sensing device operably determines proximity of the locating aperture or slot 62. When in this position, the pallet 10 is located in the ready-to-locate position and the actuator 50 can be actuated in order to move the pallet 10 from the ready-to-locate position to the precisely located position as previously described. The signalling device 60 can also include an aperture 64 for signalling the start of deceleration, and another aperture 66 for signalling the outer permissive limit for the ready-to-locate position of the pallet 10 when stopped. The outer permissive limit of approximately 100 millimeters to approximately 200 millimeters, depending on the radius of rotation for the X-axis locating roller, is the maximum distance allowed for the pallet to be stopped from the desired location, while still enabling the crank arm and roller to move the pallet from the ready-to-locate outer permissive limit position to the precisely located position with respect to the workstation. Any type of conventional sensor 68 can be used in combination with the location signaling device 60. By way of example and not limitation, the sensor can include a contact type limit switch, a non-contact magnetic read switch, or non-contact photosensor.

Referring now to Figure 9, a graph illustrates movement of the pallet 10 from a position immediately upstream of the workstation where the pallet moves from zero velocity to maximum velocity and then is decelerated as it approaches the workstation. The stop position sensed by locating device 60 and sensor 68 allows the pallet 10 to be stopped in a wider range of acceptable ready-to-locate positions (i.e. plus or minus approximately 100 millimeters) than previously possible with prior known lift-type locating workstations. The operation of the actuator 50 automatically corrects the position of the pallet 10 and forces the pallet 10 into the precisely located position in all three axes as previously described. According to the present invention, the transfer and precise locating of the pallet 10 can be accomplished in less than 7 seconds, and preferably in less than 6 seconds, and most preferably in a range of approximately 5.5 seconds to 5.0 seconds, inclusive.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. A conveyor for transporting a workpiece comprising:
at least one support defining a fixed path of travel along an X-axis with respect to a workstation having a vertically extending Z-axis and a Y-axis extending normal to the X-axis and Z-axis;
a pallet supported on the at least one support for movement along the fixed path; and
positioning means for locating the pallet in a repeatable X-Y-Z position with respect to the workstation, the positioning means including at least one locating roller and locating cam surface combination operable between the pallet and the workstation for positioning the pallet in each of the Y-axis and Z-axis, and at least one pivotable locating roller and corresponding locating cam surface combination operable between the pallet and the workstation for positioning the pallet along the X-axis, such that when the pivotable locating roller and corresponding locating cam surface combination is in a first angular position, the pallet can move relative to the workstation along the support, and when the pivotable locating roller and corresponding locating cam surface combination is in a second angular position, the pallet is accurately positioned with respect to the X-Y-Z axes of the workstation by operable engagement of the locating cam surface and locating roller combinations with one another in response to movement of the pivotable locating roller with respect to the corresponding locating cam surface combination.

2. The conveyor of claim 1, wherein at least one of the X-axis, Y-axis, and Z-axis locating cam surface is located on the pallet.

3. The conveyor of claim 2, wherein all of the X-axis, Y-axis, and Z-axis locating cam surfaces are located on the pallet.

4. The conveyor of claim 1, wherein at least one of the X-axis, Y-axis, and Z-axis locating roller is located at the workstation.

5. The conveyor of claim 4, wherein all of the X-axis, Y-axis, and Z-axis locating rollers are located at the workstation.

6. The conveyor of claim 1, wherein at least one of the X-axis, Y-axis, and Z-axis cam surface is located on the pallet, and wherein at least one of the X-axis, Y-axis, and Z-axis locating rollers is located at the workstation.

7. The conveyor of claim 1, wherein all of the X-axis, Y-axis, and Z-axis locating cam surfaces are located on the pallet, and wherein all of the X-axis, Y-axis, and Z-axis locating rollers are located at the workstation.

8. The conveyor of claim 1, wherein the pivotable locating roller and corresponding cam surface combination further comprises:
a pair of locating cam surfaces connected to the pallet and spaced from one another along the X-axis and Y-axis; and
a locating crank arm extending in opposite directions from a rotational axis, the crank arm supporting a locating roller adjacent each outer end for engagement with the corresponding locating cam surface connected to the pallet, wherein the crank arm is rotatable between a released position and an engaged position of the locating rollers with respect to the corresponding locating cam surfaces.

9. An apparatus for locating a pallet on a conveyor at a workstation comprising:
at least one complementary Y-axis locating cam surface and Y-axis locating roller combination associated with the pallet and the workstation to be operably engagable with one another as the pallet approaches a ready-to-locate position at the workstation;
at least one complementary Z-axis locating cam surface and Z-axis locating roller combination associated with the pallet and the workstation to be operably engagable with one another as the pallet approaches the ready-to-locate position at the workstation; and
at least one complementary X-axis locating cam surface and X-axis locating roller combination associated with the pallet and the workstation to be operably engagable with one another after the pallet reaches the ready-to-locate position at the workstation.

10. The apparatus of claim 9, wherein the X-axis locating cam surface includes at least one locating block associated with the pallet and the X-axis locating roller is supported from adjacent an outer end of a locating crank arm extending from at least one shaft having an axis of rotation, the locating crank arm and associated X-axis locating roller movable through an angular arc between a locating position and a released position in response to rotation of the shaft.

11. A conveyor for transporting a workpiece comprising:
at least one support rail defining a fixed path of travel along an X-axis with respect to a workstation having a vertically extending Z-axis and a Y-axis extending normal to the X-axis and Z-axis;
a pallet supported on the at least one support rail for movement along the fixed path; and
positioning means for locating the pallet in a repeatable X-Y-Z position with respect to the workstation, the positioning means including at least one locating roller and locating cam surface combination operable between the pallet and the workstation for positioning the pallet in at least the Y-axis; and
at least one pivotable locating roller and corresponding locating cam surface combination operable between the pallet and the workstation for positioning the pallet along the X-axis, such that when the pivotable locating roller and corresponding locating cam surface combination is in a first angular position, the pallet can move relative to the workstation along the support, and when the pivotable locating roller and corresponding locating cam surface combination is in a second angular position, the pallet is accurately positioned with respect to the X-Y-Z axes of the workstation by operable engagement of the positioning means in response to movement of the pivotable locating roller with respect to the corresponding locating cam surface combination.

12. The apparatus of claim 11, wherein the positioning means further comprises:
at least one locating roller and locating cam surface combination operable between the pallet and the workstation for positioning the pallet in at least the Z-axis.

13. The apparatus of claim 11, wherein the positioning means further comprises:
a roller connected to the support rail for supporting and transporting the pallet along the fixed path and for locating the pallet in the Z-axis with respect to the workstation.
